(19) **Europäisches Patentamt / European Patent Office / Office européen des brevets**

(11) **EP 4 704 076 A1**

(12) **EUROPEAN PATENT APPLICATION**
published in accordance with Art. 153(4) EPC

(43) Date of publication:
**04.03.2026 Bulletin 2026/10**

(21) Application number: **23935150.5**

(22) Date of filing: **19.12.2023**

(51) International Patent Classification (IPC):
*G10L 15/06* (2013.01)

(52) Cooperative Patent Classification (CPC):
**G10L 15/16; G10L 15/02; G10L 15/06;
G10L 15/063; G10L 15/18; G10L 15/26;
G10L 25/30;** G10L 2015/025

(86) International application number:
**PCT/CN2023/139943**

(87) International publication number:
**WO 2024/221984 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.04.2023 CN 202310460643**

(71) Applicant: **IFLYTEK CO., LTD.
Hefei, Anhui 230088 (CN)**

(72) Inventors:
• **ZHANG, Wenhui
Hefei, Anhui 230088 (CN)**

• **WAN, Genshun
Hefei, Anhui 230088 (CN)**
• **TIAN, Dingshu
Hefei, Anhui 230088 (CN)**
• **GAO, Jianqing
Hefei, Anhui 230088 (CN)**
• **PAN, Jia
Hefei, Anhui 230088 (CN)**
• **LIU, Cong
Hefei, Anhui 230088 (CN)**
• **HU, Guoping
Hefei, Anhui 230088 (CN)**

(74) Representative: **Herrero & Asociados, S.L.
Edificio Aqua - Calle Agustín de Foxá, 4-10, 2ºA
28036 Madrid (ES)**

(54) **SPEECH RECOGNITION METHOD, SPEECH RECOGNITION MODEL TRAINING METHOD, DEVICE, AND MEDIUM**

(57)     Disclosed is a speech recognition method. The method comprises: acquiring a speech to be recognized and a trained speech recognition model, the speech recognition model comprising an encoding network and a decoding network (S11); performing classification under a target speech attribute to obtain a predicted attribute category to which said speech belongs, and performing encoding based on the predicted attribute category under the target speech attribute to obtain a first encoding feature (S12); and decoding the first encoding feature based on the decoding network to obtain a recognition text of said speech (S13), wherein the speech recognition model is adjusted at least based on a first loss, and the first loss represents the difference, under the target speech attribute, between a preset attribute category of a speech sample annotation and a sample attribute category obtained after the recognition of the speech recognition model.

a to-be-recognized speech is obtained and a speech recognition model after training is obtained — S11

during each stage of encoding the to-be-recognized speech using the encoding network, the to-be-recognized speech is classified under a target speech attribute to obtain a predicted attribute category to which the to-be-recognized speech belongs, and encoding is performed to obtain a first encoding feature according to the predicted attribute category under the target speech attribute — S12

the first encoding feature is decoded according to a decoding network to obtain a recognition text of the to-be-recognized speech — S13

FIG. 1

## Description

The present disclosure claims priority of Chinese Patent Application No. 202310460643.3, entitled "SPEECH RECOGNITION METHOD, SPEECH RECOGNITION MODEL TRAINING METHOD, DEVICE, AND MEDIUM", filed April 25, 2023, the entire contents of which are incorporated herein by reference.

## TECHNICAL FIELD

The present disclosure relates to the field of artificial intelligence technologies, and in particular to a speech recognition method, a speech recognition model training method, a device, and a medium.

## BACKGROUND

Automatic speech recognition, or speech recognition for short, is a technology that converts voice signals received by a computer processor into text information that is understandable to humans after calculation. The technology is widely applied to mobile voice assistants, input method software, car navigation, and various artificial intelligence wearable devices, and has important application value. Mixture-Of-Experts (MoE) is currently a hot field in deep learning. While expanding the number of model parameters, a deep learning model may maintain an original level of computational complexity, greatly improving the overall effect of the model.

In related art, during a training process of a speech recognition model based on the Mixture-Of-Experts, samples are randomly assigned to different experts for processing. The process is trained in an unsupervised manner. Model developers cannot clearly know characteristics of the samples assigned to each expert, nor the number of experts to be set. Therefore, a large number of samples and experts are required for training, resulting in very high training costs. Furthermore, due to the adoption of unsupervised training, the samples are randomly assigned to various experts for processing. Compared with assigning the samples to the experts with corresponding attributes for processing according to attributes of the samples, randomly assigning the samples to various experts for processing results in a lower feature accuracy rate, which in turn causes a lower speech recognition accuracy rate of the speech recognition model.

## SUMMARY OF THE DISCLOSURE

In order to solve the problems mentioned above, the present disclosure provides a speech recognition method, a speech recognition model training method, a device, and a medium, which may improve the accuracy rate of speech recognition while reducing costs.

In order to solve the above technical problems, the first aspect of the present disclosure provides a speech recognition method. The method includes: obtaining a to-be-recognized speech and obtaining a speech recognition model after training, the speech recognition model including an encoding network and a decoding network; during each stage of encoding the to-be-recognized speech using the encoding network, classifying the to-be-recognized speech under a target speech attribute to obtain a predicted attribute category to which the to-be-recognized speech belongs, and performing encoding to obtain a first encoding feature according to the predicted attribute category under the target speech attribute; decoding the first encoding feature according to the decoding network to obtain a recognition text of the to-be-recognized speech, the speech recognition model being adjusted according to at least a first loss, and the first loss representing a difference between a preset attribute category annotated in a speech sample and a sample attribute category recognized and obtained by the speech recognition model under the target speech attribute.

In order to solve the above technical problems, the second aspect of the present disclosure provides a speech recognition model training method. The method includes: obtaining speech samples; during each stage of encoding the speech samples by using an encoding network of a speech recognition model, classifying the speech samples under a target speech attribute to obtain sample attribute categories to which the speech samples belong, and performing encoding to obtain first sample encoding features according to the sample attribute categories under the target speech attribute; decoding the first sample encoding features by using a decoding network of the speech recognition model to obtain recognition texts of the speech samples; determining a first loss according to differences between the sample attribute categories to which the speech samples belong and preset attribute categories annotated in the speech samples, and determining a recognition loss according to differences between the recognized texts of the speech samples and preset texts annotated in the speech samples; adjusting network parameters of the speech recognition model according to at least the first loss and the recognition loss.

In order to solve the above technical problems, the third aspect of the present disclosure provides an electronic device. The device includes a memory and a processor coupled to each other. The memory is configured to store a program instruction, and the processor is configured to execute the program instruction stored in the memory, to achieve the method according to the first aspect or the second aspect.

In order to solve the above technical problems, the fourth aspect of the present disclosure provides a computer-readable storage medium. The computer-readable storage medium is configured to store a program instruction. The program instruction is configured to be executed to achieve the method according to the first aspect or the second aspect.

The technical effects of the present disclosure are as follows. Different from the related art, the present disclosure adjusts the network parameters of the speech recognition model according to at least the first loss during a training stage of the speech recognition model. The first loss represents the difference between the preset attribute category annotated in the speech sample and the sample attribute category recognized and obtained by the speech recognition model under the target speech attribute. That is, during the training stage of the present disclosure, the target speech attribute and the preset attribute categories may be determined, and the model developer can clearly define characteristics of the samples assigned to each expert and the number of experts to be set. A supervised manner is adopted, so that a smaller number of samples and experts may be used to train the speech recognition model to reduce costs.

Furthermore, in each stage of encoding the to-be-recognized speech using the encoding network of the speech recognition model after training, the predicted attribute category to which the to-be-recognized speech belongs may be classified and obtained under the target speech attribute, and encoding is performed according to the predicted attribute category under the target speech attribute to obtain the first encoding feature. The first encoding feature is decoded according to the decoding network of the speech recognition model after training to obtain the recognition text of the to-be-recognized speech. In the encoding process, the predicted attribute category is determined, and encoding is performed according to the predicted attribute category, so as to obtain the first encoding feature with a relatively high accuracy rated, thereby improving the speech recognition accuracy rate of the speech recognition model.

**BRIEF DESCRIPTION OF THE DRAWINGS**

FIG. 1 is a flow chart of a speech recognition method according to a first embodiment of the present disclosure.
FIG. 2 is a schematic framework view of an encoding network according to an embodiment of the present disclosure.
FIG. 3 is a flow chart of a speech recognition method according to a second embodiment of the present disclosure.
FIG. 4 is a schematic framework view of an encoding network according to another embodiment of the present disclosure.
FIG. 5 is a flow chart of a speech recognition model training method according to a first embodiment of the present disclosure.
FIG. 6 is a flow chart of a speech recognition model training method according to a second embodiment of the present disclosure.

FIG. 7 is a schematic framework view of a speech recognition apparatus according to some embodiments of the present disclosure.
FIG. 8 is a schematic framework view of a speech recognition model training apparatus according to some embodiments of the present disclosure.
FIG. 9 is a schematic structural framework view of an electronic device according to some embodiments of the present disclosure.
FIG. 10 is a schematic framework view of a computer-readable storage medium according to some embodiments of the present disclosure.

**DETAILED DESCRIPTION**

The technical solutions in the embodiments of the present disclosure are described clearly and completely below in conjunction with the accompanying drawings in the embodiments of the present disclosure. Obviously, the described embodiments are only part of the embodiments of the present disclosure, not all of the embodiments. According to the embodiments of the present disclosure, all other embodiments obtained by ordinary technicians in the related art without creative work are within the scope of protection of the present disclosure.

It should be noted that in the embodiments of the present disclosure, there are descriptions involving the terms "first", "second", etc., which are only used for descriptive purposes and cannot be understood as indicating or implying relative importance or implicitly indicating the number of indicated technical features. Therefore, features defined with "first" or "second" may explicitly or implicitly include at least one of the features.

The term "embodiment" mentioned in the specification means that particular features, structures, or characteristics described in conjunction with the embodiments may be included in at least one embodiment of the present disclosure. This term appearing in various positions in the specification does not necessarily refer to the same embodiment, nor is it an independent or alternative embodiment mutually exclusive with other embodiments. Those skilled in the art explicitly or implicitly understand that the embodiments described in the specification may be combined with other embodiments.

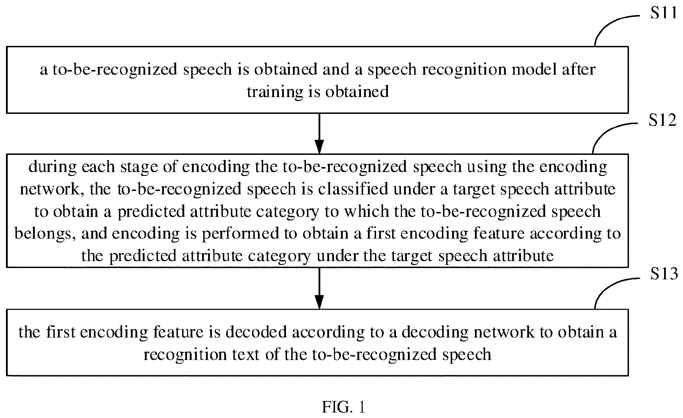

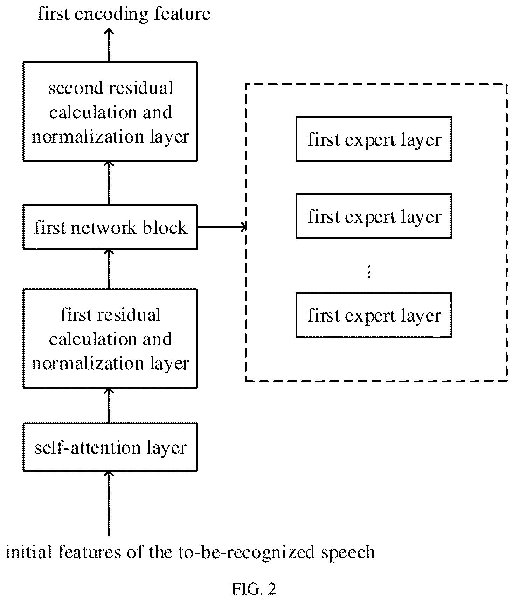

As shown in FIG. 1 and FIG. 2, FIG. 1 is a flow chart of a speech recognition method according to a first embodiment of the present disclosure, and FIG. 2 is a schematic framework view of an encoding network according to an embodiment of the present disclosure. The method may include the operations executed by the following blocks.

At block S11, a to-be-recognized speech is obtained and a speech recognition model after training is obtained.

In some embodiments, the speech recognition model may include an encoding network and a decoding network. For example, the speech recognition model is a model based on a transformer or a conformer (i.e., convolution-augmented transformer). The encoding network may include a plurality of first network blocks connected in sequence, and the first network blocks may be associated with target speech attributes. The target speech attributes may include language, phoneme, attention field of view, degree of importance, etc. The target speech attributes may be set by the user and are not limited here. The first network blocks may be associated with the same target speech attribute or with different target speech attributes respectively. The first network blocks are respectively configured to perform different stages of encoding. In some embodiments, the first network blocks may be divided into at least one network group, and each of the first network blocks in the same network group is associated with the same target speech attribute. Assuming that the speech recognition model is a transformer model including 12 first network blocks, a shallow layer of the model often includes more phoneme information and a deep layer includes more speech information. Based on this, first network blocks of the shallow layer may be associated with the phoneme. For example, 1-st to 3-rd first network blocks of the 12 first network blocks are divided into a first grid group, and the first grid group is associated with the phoneme; 4-th to 5-th first network blocks of the 12 first network blocks are divided into a second grid group, and the first grid group is associated with the degree of importance; 6-th to 8-th first network blocks of the 12 first network blocks are divided into a third grid group, and the third grid group is associated with the attention field of view; 9-th to 12-th first network blocks of the 12 first network blocks are divided into a fourth grid group, and the fourth grid group is associated with the language.

The decoding network may also include a plurality of second network blocks connected in sequence. Similarly, the second network blocks may be associated with target speech attributes. The second network blocks may be associated with the same target speech attribute or with different target speech attributes respectively. The second network blocks are configured to perform various stages at each decoding moment respectively. It is understandable that the second network blocks may be identical to or different from the first network blocks.

At block S12, during each stage of encoding the to-be-recognized speech using the encoding network, the to-be-recognized speech is classified under a target speech attribute to obtain a predicted attribute category to which the to-be-recognized speech belongs, and encoding is performed to obtain a first encoding feature according to the predicted attribute category under the target speech attribute.

In some embodiments, the encoding network includes the first network blocks connected in sequence, and the first network blocks are respectively configured to execute various stages of encoding the to-be-recognized speech. Taking the speech recognition model, which is a model based on the transformer, as an example, the transformer may include a plurality of transformer blocks (i.e., the first network blocks), and each first network block may include a first classification layer and a plurality of first expert layers. The first classification layer is configured to perform classifying under a corresponding target speech attribute. The first classification layer may classify to obtain a first probability that the to-be-recognized speech belongs to each preset attribute category under the target speech attribute. Each preset attribute category may be set according to the target speech attribute. For example, in a case where the target speech attribute is the language, the preset attribute categories of the language may include Chinese, English, etc. In a case where the target speech attribute is the phoneme, the preset attribute categories of the language may include a first vowel, a second vowel, a third vowel, a fourth vowel, etc. For another example, in a case where the target speech attribute is the attention field of view, the preset attribute categories of the language may include a long field of view and a short field of view. In a case where the target speech attribute is the degree of importance, the preset attribute categories of the language may include an important frame and an unimportant frame. Each of the first expert layers correspond one-to-one with each of the preset attribute categories under the target speech attribute. For example, the target speech attribute is the language and includes two preset attribute categories, such as Chinese and English. The first expert layers may be set corresponding to the preset attribute categories respectively, including a Chinese expert layer and an English expert layer. At least one of the first expert layers is configured to perform encoding according to the predicted attribute category under the target speech attribute.

In some embodiments, a first network block corresponding to a current stage may be selected as a first target network block. In a case where the first network block corresponding to the current stage is a first first network block, the first first network block may be used as the first target network block. In a case where the first network block corresponding to the current stage is a last first network block, the last first network block may be used as the first target network block. Classification is performed by a first classification layer in the first target network block to obtain the first probability that the to-be-recognized speech belongs to each preset attribute category under the target speech attribute. The predicted attribute category to which the to-be-recognized speech belongs is determined according to the first probability that the to-be-recognized speech belongs to each preset attribute category. A first expert layer corresponding to the predicted attribute category in the first target network block is selected as a first target expert layer. The first target expert layer is configured to perform encoding to obtain the first encoding feature.

In some embodiments, in a case where the first network block corresponding to the current stage is the first first network block in the encoding network, a first classification layer of the first first network block may be used to classify initial features of the to-be-recognized speech, so as to obtain the first probability that the to-be-recognized speech belongs to each preset attribute category under the target speech attribute. A preset attribute category corresponding to the largest first probability is selected as the predicted attribute category to which the to-be-recognized speech belongs. A first expert layer corresponding to the predicted attribute category in the first first network block is selected as the first target expert layer. The first target expert layer is used to encode the initial features of the to-be-recognized speech, so as to obtain the first encoding feature. The speech recognition model further includes an embedding layer and an attention layer. The initial features of the to-be-recognized speech are obtained after the embedding layer and the attention layer process the to-be-recognized speech. The first encoding feature obtained by the first first network block is input into a second first network block, enabling the second first network block to execute the same steps as the first first network block to obtain a first encoding feature output by the second first network block, and so on, until a first encoding feature output by the last first network block is obtained. The first encoding feature output by the last first network block is used as the first encoding feature finally output by the encoding network. Alternatively, the first encoding feature output by the last first network block is subjected to a residual process and a normalization operation to obtain the first encoding feature finally output by the encoding network.

In some other embodiments, for the first network block corresponding to each stage, the first classification layer in the first network block is used to classify the initial features of the to-be-recognized speech, so as to obtain the first probability that the to-be-recognized speech belongs to each preset attribute category under the target speech attribute. The preset attribute category corresponding to the largest first probability is selected as the predicted attribute category to which the to-be-recognized speech belongs. The first expert layer corresponding to the predicted attribute category in the first network block is selected, and the first expert layer is used to encode the initial features of the to-be-recognized speech to obtain the first encoding feature. The first encoding feature obtained from each first network block are fused to obtain the first encoding feature finally output by the encoding network.

In some embodiments, as shown in FIG. 2, the encoding network includes a self-attention layer, a first residual calculation and normalization layer, a first network block, and a second residual calculation and normalization layer, which are connected in sequence. After the initial features of the to-be-recognized speech are encoded by the encoding network, the first encoding feature may be obtained. The first network block includes the first classification layer and the first expert layers.

At block S13, the first encoding feature is decoded according to a decoding network to obtain a recognition text of the to-be-recognized speech.

In some embodiments, the decoding network may adopt an autoregressive decoder, a transformer decoder, or an attention-based decoder.

In some embodiments, the decoding network adopts the transformer decoder. The decoding network includes an attention layer, an interactive attention processing layer, a feedforward neural network, a fully connected layer, and a normalization layer, which are connected in sequence. Both decoding characters obtained at each previous decoding moment and the first encoding feature output by the encoding network are input into the decoding network. The decoding network uses the attention layer to perform attention processing on features of the decoding characters obtained at each previous decoding moment to obtain a first feature vector. An interactive attention processing is performed on the first feature vector and the first encoding feature to obtain a second feature vector. After the second feature vector passes through the feedforward neural network, the fully connected layer, and the normalization layer in sequence, a decoding character at a current moment may be obtained.

In some other embodiments, the decoding network further includes a plurality of second network blocks connected in sequence. The second network blocks may be arranged before the interactive attention layer. The second network blocks are used to perform processing on the features of the decoding characters obtained at each previous decoding moment to obtain a third feature vector. The interactive attention processing is performed on the third feature vector and the first encoding feature to obtain the second feature vector.

In some embodiments, the second network blocks are respectively associated with the target speech attributes. The second network blocks may be associated with the same target speech attribute or with different target speech attributes respectively. Each second network block includes a second classification layer for classification under the target speech attribute, and a plurality of second expert layers corresponding one-to-one with preset attribute categories respectively under the target speech attribute. Each of the second expert layers is used for decoding according to a corresponding preset attribute category under the target speech attribute. Different second network blocks are used to perform different stages at each decoding moment.

At each decoding moment, a second network block corresponding to the current stage in the decoding moment is selected as a second target network block. For example, at a first stage of a second decoding moment, a second network block corresponding to the first stage is a first second network block in the decoding network, and the first second network block is used as the second target network block. A second classification layer in the second target network block is used to perform classifying on decoding characters decoded at each previous decoding moment to obtain a second probability that each decoding character belongs to each preset attribute category. For example, at a first decoding moment, the decoding characters decoded at each previous decoding moment only include start characters. For example, at the second decoding moment, the decoding characters decoded at each previous decoding moment include decoding characters decoded at the first decoding moment and the start characters. According to the second probabilities that the decoding characters belong to each preset attribute category, a second expert layer for decoding the decoding characters in the second target network block is determined as a second target expert layer. In some embodiments, a second network layer, corresponding to the preset attribute category corresponding to the largest second probability, may be selected as the second target expert layer. In some other embodiments, one of second expert layers, corresponding to the preset attribute categories corresponding to each second probability greater than a preset probability, may be selected as the second target expert layer. The second target expert layer is used to perform decoding on the decoding characters to obtain a first decoding feature. In a case where the decoding network only includes one second network block, after the second network block outputs the first decoding feature, decoding is performed according to the first encoding feature and the first decoding feature to obtain the decoding characters at the current decoding moment. In a case where the decoding network includes multiple second network blocks, after the second network block corresponding to the current stage outputs the first decoding feature, the first decoding feature is input to a second network block corresponding to a next stage. The second network block corresponding to the next stage performs the same steps as the second network block corresponding to the current stage to obtain a first decoding feature output by the second network block corresponding to the next stage, and so on, until a second network block corresponding to a last stage performs decoding according to a first decoding feature output by the second network block corresponding to the last stage and the first encoding feature to obtain the decoding characters at the current decoding moment.

By the above method, after the decoding characters at each decoding moment are obtained, the decoding characters may be combined to obtain the recognized text. By setting multiple second network blocks in the decoding network, the overall scale of the speech recognition model may be greatly expanded, further improving the calculation effect of the model.

In the above-mentioned embodiments, the speech recognition model is adjusted according to at least a first loss. The first loss represents a difference between the preset attribute category annotated in a speech sample and a sample attribute category recognized and obtained by the speech recognition model under the target speech attribute. In some embodiments, during a training process, the sample attribute category classified by each first classification layer in the encoding network under the target speech attribute may be obtained. The first loss is determined according to the difference between the sample attribute category and the preset attribute category annotated in the speech sample. Network parameters of the speech recognition model are adjusted according to at least the first loss. In some other embodiments, the speech recognition model may be adjusted according to a second loss. The second loss is determined according to the following factors: under the target speech attribute, a proportion of each sample character in a text sample annotated by the speech sample belonging to each preset attribute category and an average probability that the sample character belongs to each preset attribute category. The training process of the speech recognition model will not be described in detail here, and please refer to the following for a detailed description.

Through the above method, the speech is able to be recognized to obtain the recognized text. During a training stage, a process of obtaining the sample attribute categories recognized by the speech recognition model is trained in a supervised manner, and the model developers can clearly define characteristics of the samples assigned to each expert and the number of experts to be set. In this way, a smaller number of samples and experts may be used to train the speech recognition model, thereby reducing costs. Furthermore, the speech recognition model after training is used to recognize the speech. During an encoding process, the predicted attribute category is determined, and encoding is performed according to the predicted attribute category, so as to obtain the first encoding feature with a relatively high accuracy rate, thereby improving the speech recognition accuracy rate of the speech recognition model.

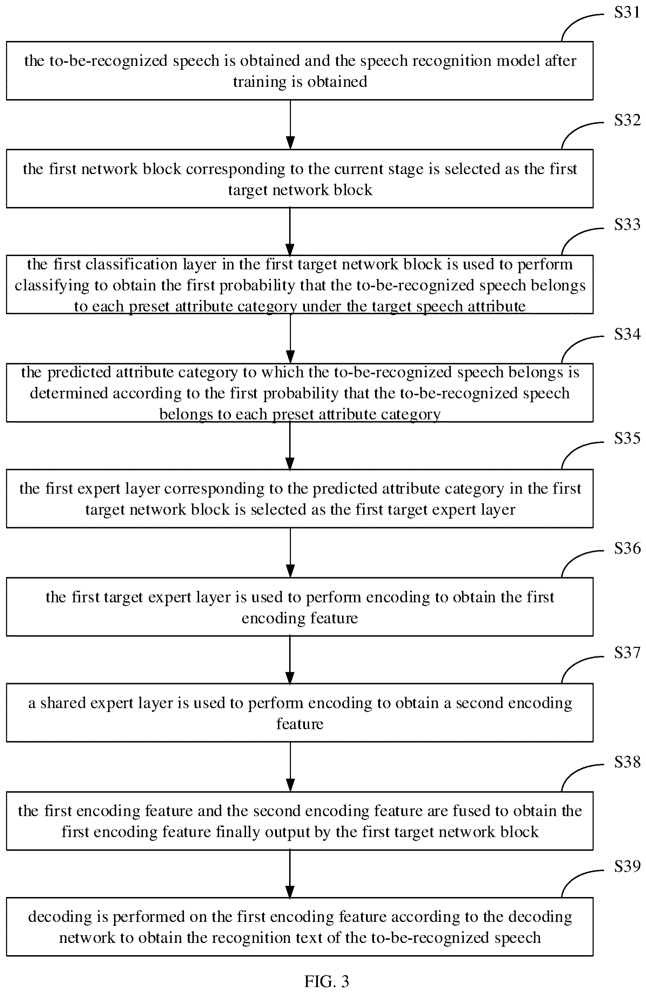

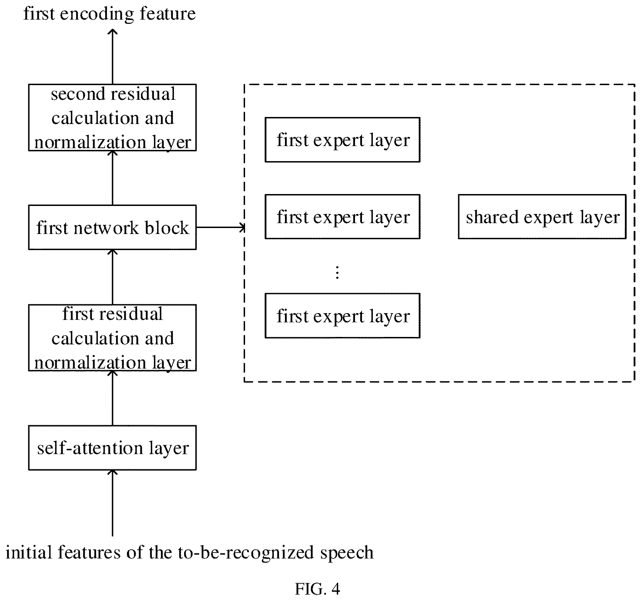

As shown in FIG. 3 and FIG. 4, FIG. 3 is a flow chart of a speech recognition method according to a second embodiment of the present disclosure, and FIG. 4 is a schematic framework view of an encoding network according to another embodiment of the present disclosure. The method may include the operations executed by the following blocks.

At block S31, the to-be-recognized speech is obtained and the speech recognition model after training is obtained.

The speech recognition model includes the encoding network and the decoding network.

At block S32, the first network block corresponding to the current stage is selected as the first target network block.

At block S33, the first classification layer in the first target network block is used to perform classifying to obtain the first probability that the to-be-recognized speech belongs to each preset attribute category under the target speech attribute.

At block S34, the predicted attribute category to which the to-be-recognized speech belongs is determined according to the first probability that the to-be-recognized speech belongs to each preset attribute category.

At block S35, the first expert layer corresponding to the predicted attribute category in the first target network block is selected as the first target expert layer.

At block S36, the first target expert layer is used to perform encoding to obtain the first encoding feature.

Blocks S31-S36 please refer to the first embodiment of the speech recognition method provided in the present disclosure, and will not be repeated here.

At block S37, a shared expert layer is used to perform encoding to obtain a second encoding feature.

As shown in FIG. 4, the coding network may further include the shared expert layer. In some embodiments, the shared expert layer may be set in each first network block. The shared expert layer is configured to perform an encoding process on the initial features of the to-be-recognized speech input into the first network block or the first encoding feature output by the previous first network block to obtain the second encoding feature.

At block S38, the first encoding feature and the second encoding feature are fused to obtain the first encoding feature finally output by the first target network block.

The first encoding feature output by the first target expert layer in the first network block corresponding to the current stage and the second encoding feature output by the shared expert layer are fused to obtain the first encoding feature finally output by the first target network block. The fusion of the first encoding feature and the second encoding feature may be achieved by adding or concatenating the first encoding feature and the second encoding feature.

At block S39, decoding is performed on the first encoding feature according to the decoding network to obtain the recognition text of the to-be-recognized speech.

The detailed implementation of block S39 please refer to block S13 of the first embodiment of the speech recognition method provided in the present disclosure, which will not be repeated here.

The shared expert layer may be added to the decoding network. In some embodiments, the shared expert layer may be set in each second network block. The shared expert layer is configured to perform a decoding process on the initial features of the decoding characters input to the second network block or a second decoding feature output by a previous second network block to obtain a second decoding feature. The first decoding feature output by the second target expert layer in the second network block corresponding to the current stage and the second decoding feature output by the shared expert layer are fused to obtain a first decoding feature finally output by the second target network block. The operations of encoding by the shared expert layer may be executed simultaneously with the operations of encoding by the first target expert layer, or before the operations of encoding by the first target expert layer.

In some embodiments, in a case where the model developer pre-sets the target speech attribute, the preset attribute categories, and the expert layer corresponding one-to-one with the preset attribute category, a certain expert layer may be assigned relatively less speech data to be processed, which may cause the speech recognition model insufficient in fitting the speech data of the corresponding preset attribute category. Therefore, the shared expert layers are added to the encoding network and/or decoding network, so that each speech data entering the network block may pass through the shared expert layer. Since the shared expert layer has seen each feature entering the network block, the shared expert layer has a stronger fitting ability, which may make up for the poor fitting ability caused by uneven distribution of speech data.

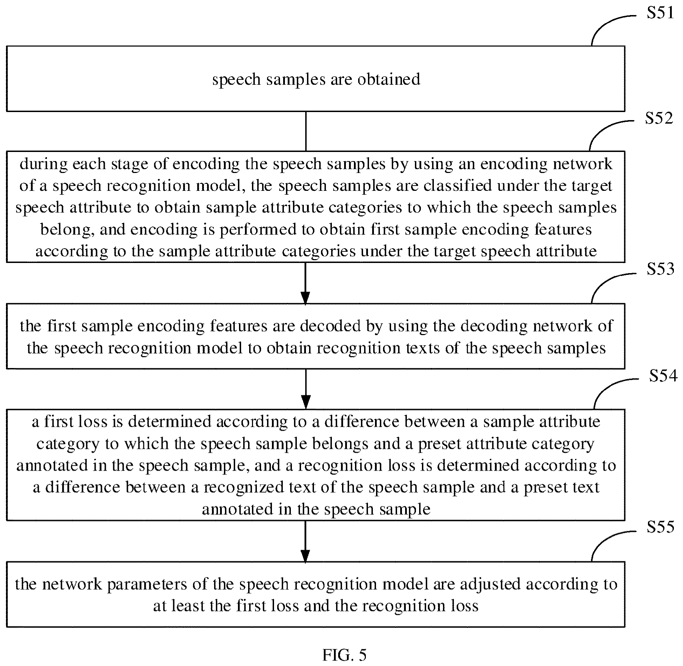

As shown in FIG. 5, FIG. 5 is a flow chart of a speech recognition model training method according to a first embodiment of the present disclosure. The method may include the operations executed by the following blocks.

At block S51, speech samples are obtained.

At block S52, during each stage of encoding the speech samples by using an encoding network of a speech recognition model, the speech samples are classified under the target speech attribute to obtain sample attribute categories to which the speech samples belong, and encoding is performed to obtain first sample encoding features according to the sample attribute categories under the target speech attribute.

At block S53, the first sample encoding features are decoded by using the decoding network of the speech recognition model to obtain recognition texts of the speech samples.

An encoding process of the encoding network on the speech samples is the same as a process of the encoding network encoding the to-be-recognized speech, and a process of the decoding network decoding the first sample encoding features is the same as a process of the decoding network decoding the first encoding feature, which will not be repeated here.

During the training stage of the speech recognition model, each speech sample is annotated with a preset attribute category. Each speech sample may be annotated with multiple preset attribute categories. For example, the speech sample is annotated with preset attribute categories such as Chinese, a first vowel, etc. In some embodiments, the first classification layer in the first network block of the encoding network classifies the speech sample under the target speech attribute to obtain the sample attribute category of the speech sample. A part of the first classification layers are provided with learning parameters, that is, the network parameters of the speech recognition model. Another part of the first classification layers may not be set with learning parameters. For example, a language classification layer and a phoneme classification layer may be set with learning parameters, and an attention field of view classification layer and a degree of importance classification layer may not be set with learning parameters.

Taking the target speech attribute being the language as an example, the first classification layer in the first network block associated with the language may be a language classification layer. That is, the first classification layer is configured to determine the language of the speech samples. A calculation process of the language classification layer is as follows.

$$r = W_D^n \cdot Pooling(X_T') + b$$

$$e = argmax\big(softmax(r)\big)$$

$$X_T'' = FFN_e(X_T')$$

The $W_D^n$ represents a D*n matrix. The D is a dimension of a hidden layer of the speech recognition model. The n is the number of language supported by the speech recognition model, that is, the number of preset attribute categories under the language, also the number of first expert layers in the first network block corresponding to the language. The Pooling represents an average pooling operation in a time dimension. The FFNe represents the first target expert layer e that processes the initial features of the speech samples or the first encoding feature output by the previous first network block. The W and b are the network parameters of the language classification layer. The $X_T'$ is the initial features of the speech samples input to the first network block or the first encoding feature output by the previous first network block. The $X_T''$ is the first encoding feature output by the first target expert layer e.

Taking the target speech attribute being the phoneme as an example, the first classification layer in the first network block associated with the phoneme may be a phoneme classification layer. That is, the first classification layer is configured to determine the phoneme of the speech samples. A calculation process of the phoneme classification layer is as follows.

$$r_T = W_D^m \cdot X_t' + b$$

$$e_T = argmax\big(softmax(r_T)\big)$$

$$X_t'' = FFN_{e_t}(X_t') , \quad 0 \leq t \leq T$$

The $W_D^m$ represents a D*m matrix. The D is a dimension of the hidden layer of the speech recognition model. The m is the number of preset attribute categories under the phoneme, that is, the number of first expert layers in the first network block corresponding to the phoneme. The $FFN_{e_t}$ represents the first target expert layer $e_t$ that processes the initial features of the speech samples or the first encoding feature output by the previous first network block. The $X_t'$ is the initial features of the speech samples input to the first network block or the first encoding feature output by the previous first network block. The $X_t''$ is the first encoding feature output by the first target expert layer $e_t$.

Taking the target speech attribute being the attention field of view as an example, the first classification layer in the first network block associated with the attention field of view may be an attention field of view classification layer. That is, the first classification layer is configured to determine an attention of a certain frame of the speech sample to other frames. In some embodiments, there is a self-attention module in the transformer-based model. The attention of a certain frame to other frames may be calculated according to a score calculated by the self-attention module. By calculating a sum of attentions of the certain frame to several adjacent frames, an attention of the certain frame in the short field of view may be obtained. An attention threshold is set to distinguish the length of the attention field of view of a certain frame. Frames with a longer attention field of view contain some unique information and may calculate with distant frames to obtain a higher score. While frames with a short attention field of view may only contain information of the frames respectively and a calculated score is smaller. Therefore, the attention threshold may be set to determine whether an attention of a certain frame is greater than the attention threshold. In a case where the attention is greater than the attention threshold, the certain frame is considered to have a longer attention field of view, and the certain frame is assigned to a long field of view expert layer for processing. In a case where the attention is less than the attention threshold, the certain frame is considered to have a shorter attention field of view, and the certain frame is assigned to a short field of view expert layer for processing.

Taking the target speech attribute being the degree of importance as an example, the first classification layer in the first network block associated with the degree of importance may be a degree of importance classification layer. That is, the first classification layer is configured to determine a degree of importance of a certain frame of the speech sample. In some embodiments, a sum of attention scores of a certain speech frame to other speech frames within a preset range may be calculated. In a case where the sum of attention scores is greater than a preset degree of importance threshold, the certain speech frame is considered to be an important frame and is assigned to an important frame expert layer for processing. In a case where the attention score is less than the preset degree of importance threshold, the certain speech frame is considered to be an unimportant frame and is assigned to an unimportant frame expert layer for processing.

At block S54, a first loss is determined according to a difference between a sample attribute category to which the speech sample belongs and a preset attribute category annotated in the speech sample, and a recognition loss is determined according to a difference between a recognized text of the speech sample and a preset text annotated in the speech sample.

For each first classification layer with learning parameters, the first loss is determined by using the difference between the sample attribute category to which the speech sample belongs classified by the first classification layer and the preset attribute category annotated in the speech sample. The first loss may be a cross entropy loss. In a case where the encoding network includes multiple first classification layers, each of which provided with learning parameters, multiple first losses may be obtained.

At block S55, the network parameters of the speech recognition model are adjusted according to at least the first loss and the recognition loss.

A sum of multiple first losses and the recognition loss is taken as a total loss. The network parameters of the speech recognition model are adjusted according to the total loss.

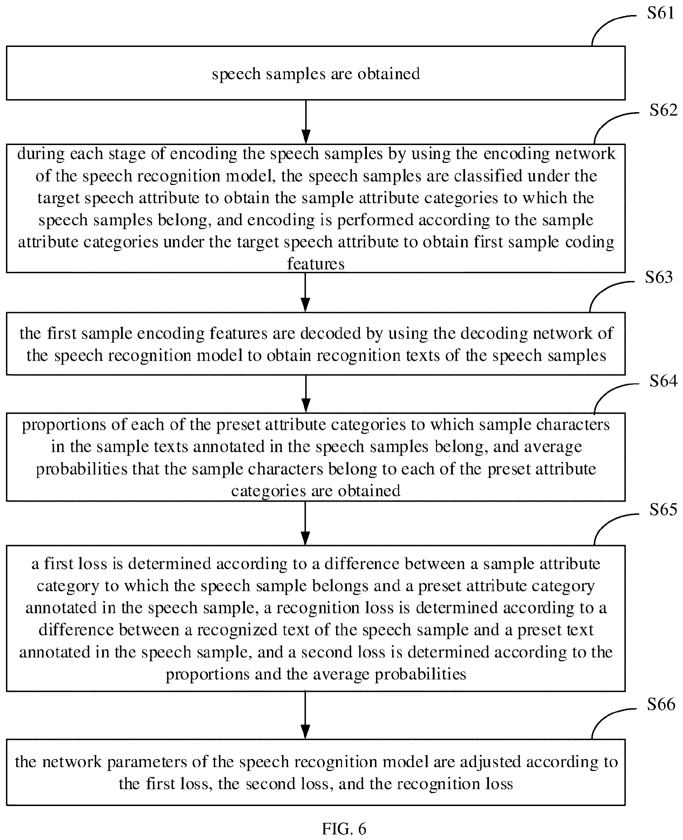

As shown in FIG. 6, FIG. 6 is a flow chart of a speech recognition model training method according to a second embodiment of the present disclosure. The method may include the operations executed by the following blocks.

At block S61, speech samples are obtained.

At block S62, during each stage of encoding the speech samples by using the encoding network of the speech recognition model, the speech samples are classified under the target speech attribute to obtain the sample attribute categories to which the speech samples belong, and encoding is performed according to the sample attribute categories under the target speech attribute to obtain first sample coding features.

At block S63, the first sample encoding features are decoded by using the decoding network of the speech recognition model to obtain recognition texts of the speech samples.

An encoding process of the encoding network on the speech samples is the same as a process of the encoding network encoding the to-be-recognized speech, and a process of the decoding network decoding the first sample encoding features is the same as a process of the decoding network decoding the first encoding feature, which will not be repeated here. The implementations of blocks S61-S63 may refer to blocks S51-S53 of the first embodiment of the speech recognition model training method provided in the present disclosure, which will not be repeated here.

At block S64, proportions of each of the preset attribute categories to which sample characters in the sample texts annotated in the speech samples belong, and average probabilities that the sample characters belong to each of the preset attribute categories are obtained.

In some embodiments, the decoding network further includes a plurality of second network blocks connected in sequence. In order to make the decoding characters assigned to each second expert layer in the second network block as uniform as possible, a third loss function is set to constrain the distribution of each decoding character. The third loss function is as follows.

$$L_b = n \cdot \sum_{i=1}^{n} s_i \cdot P_i$$

The n represents the number of second expert layers contained in the decoding network. The $s_i$ represents a proportion of each decoding character in a training set (i.e., a batch) assigned to the i-th second expert layer, that is, a proportion of each decoding character in the training set belonging to the i-th sample attribute category. The $P_i$ represents an average probability of the decoding characters assigned to the i-th second expert layer, that is, an average probability of the decoding characters belonging to each sample attribute category.

In some embodiments, the sample characters in the sample text annotated in the speech sample may belong to the same training set. A total number of sample characters in the training set and a first number of sample characters belonging to each preset attribute category are obtained. A ratio of the first number to the total number is used as the proportions of the preset attribute categories to which sample characters in the sample texts annotated in the speech samples belong. For example, the total number of sample characters is 10, a first number of sample characters belonging to preset attribute category A is 3, and a proportion of the sample characters belonging to preset attribute category A is 3/10. The probability of each sample character belonging to each preset attribute category is obtained, and the probability of each sample character belonging to the same preset attribute category is averaged to obtain the average probability of the sample character belonging to the preset attribute category. For example, a probability that sample character 1 belongs to preset attribute category A is 1/3, and a probability that sample character 2 belongs to preset attribute category A is 1/4. The two probabilities are averaged to obtain an average probability of the sample characters belonging to preset attribute category A.

At block S65, a first loss is determined according to a difference between a sample attribute category to which the speech sample belongs and a preset attribute category annotated in the speech sample, a recognition loss is determined according to a difference between a recognized text of the speech sample and a preset text annotated in the speech sample, and a second loss is determined according to the proportions and the average probabilities.

In some embodiments, determining the second loss according to the proportions and the average probabilities includes: obtaining a product of a proportion of the sample characters belonging to the same preset attribute category and an average probability of the sample characters belonging to the corresponding same preset attribute category as a probability parameter; and taking a product of a sum of first parameters and the number of sample attribute categories as the second loss.

At block S66, the network parameters of the speech recognition model are adjusted according to the first loss, the second loss, and the recognition loss.

In some embodiments, the first loss, the second loss, and the recognition loss may be summed to obtain a total loss. The network parameters of the speech recognition model may be adjusted according to the total loss.

In the above-mentioned training process of the speech recognition model, the encoding network of the speech recognition model is trained in a supervised manner. That is, for each first classification layer with learning parameters, the first loss is determined by using the difference between the sample attribute category to which the speech sample belongs classified by the first classification layer and the preset attribute category annotated in the speech sample. The decoding network of the speech recognition model is trained and constrained in an unsupervised manner. That is, the second network blocks contained in the decoding network are classified under the target speech attribute to obtain the sample attribute category to which the speech sample belongs, and decoding is performed according to the sample attribute category under the target speech attribute. In this process, the third loss function is introduced to make the number of speech samples assigned to each second expert layer as uniform as possible. Furthermore, the recognition loss is determined according to a difference between a recognized text of the speech sample and a preset text annotated in the speech sample. The parameters of the speech recognition model are adjusted according to the recognition loss, the first loss, and the second loss. Through the above-mentioned training, the speech recognition model may maintain a good text recognition effect when a small number of second expert layers are set.

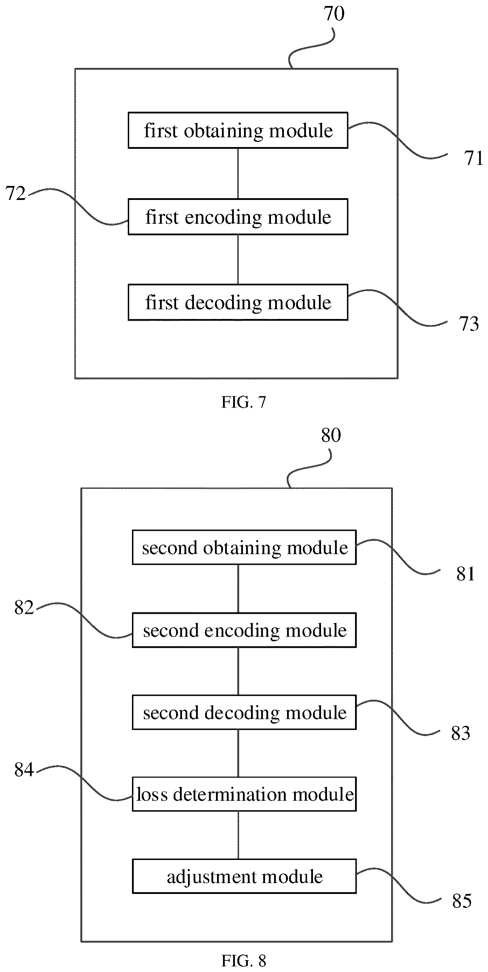

As shown in FIG. 7, FIG. 7 is a schematic framework view of a speech recognition apparatus according to some embodiments of the present disclosure. The speech recognition apparatus 70 includes a first obtaining module 71, a first encoding module 72, and a first decoding module 73. The first obtaining module 71 is configured to obtain a to-be-recognized speech and to obtain a speech recognition model after training. The speech recognition model includes an encoding network and a decoding network. The first encoding module 72 is configured to classify the to-be-recognized speech under a target speech attribute to obtain a predicted attribute category to which the to-be-recognized speech belongs, and to perform encoding to obtain a first encoding feature according to the predicted attribute category under the target speech attribute, during each stage of encoding the to-be-recognized speech using the encoding network. The first decoding module 73 is configured to decode the first encoding feature according to the decoding network to obtain a recognition text of the to-be-recognized speech. The speech recognition model is adjusted according to at least a first loss, and the first loss represents a difference between a preset attribute category annotated in a speech sample and a sample attribute category recognized and obtained by the speech recognition model under the target speech attribute.

In the above method, during the training stage of the speech recognition model, the network parameters of the speech recognition model are adjusted according to at least the first loss. The first loss represents the difference between the preset attribute category annotated in the speech sample and the sample attribute category recognized and obtained by the speech recognition model under the target speech attribute. That is, during the training stage of the present disclosure, the target speech attribute and the preset attribute categories may be determined, and the model developer can clearly define characteristics of the samples assigned to each expert and the number of experts to be set. A supervised manner is adopted, so that a smaller number of samples and experts may be used to train the speech recognition model to reduce costs.

Furthermore, in each stage of encoding the to-be-recognized speech using the encoding network of the speech recognition model after training, the predicted attribute category to which the to-be-recognized speech belongs may be classified and obtained under the target speech attribute, and encoding is performed according to the predicted attribute category under the target speech attribute to obtain the first encoding feature. The first encoding feature is decoded according to the decoding network of the speech recognition model after training to obtain the recognition text of the to-be-recognized speech. In the encoding process, the predicted attribute category is determined, and encoding is performed according to the predicted attribute category, so as to obtain the first encoding feature with a relatively high accuracy rated, thereby improving the speech recognition accuracy rate of the speech recognition model.

In some embodiments, the encoding network includes a plurality of first network blocks connected in sequence and associated with the target speech attribute, the first network blocks are respectively configured to execute different stages of encoding, each of the first network blocks associated with the target speech attribute includes a first classification layer for classifying under the target speech attribute and a plurality of first expert layers corresponding one-to-one with preset attribute categories under the target speech attribute, and at least one of the first expert layers is configured to perform encoding according to the predicted attribute category under the target speech attribute.

In some embodiments, before before the classifying the to-be-recognized speech under a target speech attribute to obtain a predicted attribute category to which the to-be-recognized speech belongs, a selection module of the speech recognition apparatus 70 is configured to select one of the first network blocks corresponding to a current stage as a first target network block.

The classifying the to-be-recognized speech under a target speech attribute to obtain a predicted attribute category to which the to-be-recognized speech belongs, includes: performing classifying by using a first classification layer in the first target network block, to obtain a first probability that the to-be-recognized speech belongs to each of the preset attribute categories under the target speech attribute; and determining the predicted attribute category to which the to-be-recognized speech belongs according to the first probability that the to-be-recognized speech belongs to each of the preset attribute categories.

The performing encoding to obtain a first encoding feature according to the predicted attribute category under the target speech attribute, includes: selecting one of first expert layers in the first target network block corresponding to the predicted attribute category as a first target expert layer; and performing encoding to obtain the first encoding feature by using the first target expert layer.

In some embodiments, the speech recognition apparatus 70 may configured to: input, in response to the one of the first network blocks corresponding to the current stage being not a last one of the first network blocks in the encoding network, a first encoding feature output by the one of the first network blocks corresponding to the current stage to a next one of the first network blocks, until the one of the first network blocks corresponding to the current stage is the last one of the first network blocks in the encoding network; and select a first encoding feature output by the last one of the first network blocks as a first encoding feature finally output by the encoding network.

By setting multiple first network blocks, the overall scale of the speech recognition model may be greatly expanded, thereby improving the speech recognition effect of the speech recognition model.

In some embodiments, each of the first network blocks further includes a shared expert layer. After the performing encoding to obtain the first encoding feature by using the first target expert layer, the speech recognition apparatus 70 may further configured to: perform encoding to obtain a second encoding feature by using the shared expert layer; and fuse the first encoding feature and the second encoding feature to obtain a first encoding feature finally output by the first target network block. These operations may be executed by the first encoding module 72.

Therefore, the problem of insufficient sample fitting ability of the speech recognition model may be solved by the shared expert layer.

In some embodiments, the first network blocks are divided into at least one network group, and each of the first network blocks in the same network group is associated with the same target speech attribute.

In some embodiments, the decoding network includes a plurality of second network blocks connected in sequence and associated with the target speech attribute, each of the second network blocks associated with the target speech attribute includes a second classification layer for classifying under the target speech attribute and a plurality of second expert layers corresponding one-to-one with preset attribute categories under the target speech attribute, and at least one of the second expert layers is configured to perform decoding according to a corresponding one of the preset attribute categories under the target speech attribute.

In some embodiments, the recognition text is obtained by combining decoding characters decoded at each decoding moment respectively, and each stage of each decoding moment is executed by a different one of the second network blocks; at each decoding moment, the method includes: selecting one of the second network blocks corresponding to a current stage of the decoding moment as a second target network block; performing classifying on each of the decoding characters decoded at each previous decoding moment respectively by using a second classification layer in the second target network block, to obtain a second probability that each of the decoding characters belongs to each of the preset attribute categories; determining a second expert layer in the second target network block for decoding the decoding characters as a second target expert layer according to the second probability that each of the decoding characters belongs to each of the preset attribute categories; performing decoding on the decoding characters by using the second target expert layer to obtain a first decoding feature; and performing decoding according to the first encoding feature and the first decoding feature to obtain a decoding character at the decoding moment.

Multiple second network blocks are arranged in the decoding network to further improve the speech recognition effect of the speech recognition model.

In some embodiments, the speech recognition model is further adjusted according to a second loss, and the second loss is determined according to: under the target speech attribute, a proportion of each sample character in a text sample annotated by the speech sample belonging to each of preset attribute categories and an average probability that the sample character belongs to each of the preset attribute categories.

By using the second loss to adjust the parameters of the speech recognition model, the number of sample characters belonging to each preset attribute category may be made more uniform.

As shown in FIG. 8, FIG. 8 is a schematic framework view of a speech recognition model training apparatus according to some embodiments of the present disclosure. The speech recognition model training apparatus 80 includes a second obtaining module 81, a second encoding module 82, a second decoding module 83, a loss determination module 84, and an adjustment module 85. The second obtaining module 81 is configured to obtain speech samples. The second encoding module 82 is configured to classify the speech samples under a target speech attribute to obtain sample attribute categories to which the speech samples belong, and to perform encoding to obtain first sample encoding features according to the sample attribute categories under the target speech attribute, during each stage of encoding the speech samples by using an encoding network of a speech recognition model. The second decoding module 83 is configured to decode the first sample encoding features by using a decoding network of the speech recognition model to obtain recognition texts of the speech samples. The loss determination module 84 is configured to determine a first loss according to differences between the sample attribute categories to which the speech samples belong and preset attribute categories annotated in the speech samples, and determining a recognition loss according to differences between the recognized texts of the speech samples and preset texts annotated in the speech samples. The adjustment module 85 is configured to adjust network parameters of the speech recognition model according to at least the first loss and the recognition loss.

In some embodiments, the second obtaining module 81 is further configured to obtain proportions of the preset attribute categories to which sample characters in sample texts annotated in the speech samples belong, and average probabilities that the sample characters belong to each of the preset attribute categories. The loss determination module 84 is further configured to determine a second loss according to the proportions and the average probabilities. The adjustment module 85 is configured to adjust the network parameters of the speech recognition model according to the first loss, the second loss, and the recognition loss.

In some embodiments, the determining a second loss according to the proportions and the average probabilities, includes: obtaining products, each of which is multiple by one the proportions of one of the preset attribute categories to which the sample characters belong and one of the average probabilities that the sample characters belong to the one of preset attribute categories, as probability parameters; taking a product of a sum of the probability parameters and the number of preset attribute categories as the second loss.

In the above method, a third loss is introduced at the decoding network, so that the number of sample characters assigned to each second expert layer in the decoding network is more uniform.

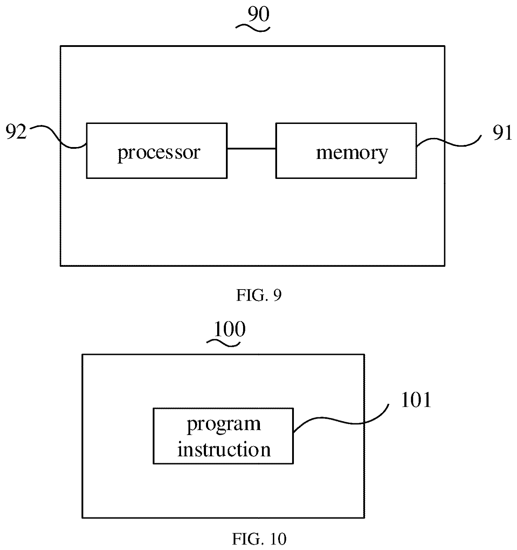

As shown in FIG. 9, FIG. 9 is a schematic structural framework view of an electronic device according to some embodiments of the present disclosure.

The electronic device 90 includes a memory 91 and a processor 92 coupled to each other. The memory 91 is configured to store a program instruction. The processor 92 is configured to execute the program instruction stored in the memory 91 to achieve the operations of any of the above method embodiments. In an implementation scenario, the electronic device 90 may include, but is not limited to: a microcomputer and a server. In addition, the electronic device 90 may also include a mobile device such as a laptop computer, a tablet computer, etc., which is not limited here.

In some embodiments, the processor 92 is configured to control itself and the memory 91 to achieve the operations of any of the above-mentioned method embodiments. The processor 92 may be a central processing unit (CPU). The processor 92 may be an integrated circuit chip with signal processing capabilities. The processor 92 may also be a general-purpose processor, a digital signal processor (DSP), an application specific integrated circuit (ASIC), a field-programmable gate array (FPGA) or other programmable logic devices, discrete gates or transistor logic devices, discrete hardware components. The general-purpose processor may be a microprocessor or the processor may also be any conventional processor, etc. In addition, the processor 92 may be implemented by an integrated circuit chip.

As shown in FIG. 10, FIG. 10 is a schematic framework view of a computer-readable storage medium according to some embodiments of the present disclosure.

The computer-readable storage medium 100 is configured to store a program instruction 101. The program instruction 101 is configured to be executed by a processor to achieve the operations of any of the above method embodiments.

The computer-readable storage medium 100 may be a medium, able to store a computer program, such as a USB flash drive, a mobile hard disk, a read-only memory (ROM), a random access memory (RAM), a magnetic disk, or an optical disk, or may be a server that stores the computer program. The server may send the stored computer program to other devices for execution, or may also execute the stored computer program itself.

The above description of various embodiments tends to emphasize the differences between the various embodiments. The same or similar aspects may reference each other, and such references will not be repeated herein for the sake of brevity.

In the embodiments provided in the present disclosure, the disclosed methods and apparatus may be implemented in other ways. For example, the apparatus embodiments described above are only schematic. For example, the division of modules or units is only a logical function division. There may be other division methods in actual implementation. For example, multiple units or components may be combined or integrated into another system, or some features may be ignored or not executed. The mutual coupling or direct coupling or communication connection shown or discussed may be via some interfaces, and the indirect coupling or communication connection of devices or units may be electrical, mechanical, or other forms.

The units described as separate components may or may not be physically separated, and the components shown as units may or may not be physical units. That is, the components may be located in one place or distributed on multiple network units. Some or all of the units may be selected according to actual requirements to achieve the purpose of the embodiments of the present disclosure.

In addition, each functional unit in each embodiment of the present disclosure may be integrated into one processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, the integrated unit may be stored in a computer-readable storage medium. The technical solutions of the present disclosure are essentially or the part that contributes to the prior art or all or part of the technical solutions may be embodied in the form of a software product. The computer software product is stored in a storage medium, including a plurality of instructions to enable a computer device (which may be a personal computer, server, or network device, etc.) or a processor to execute all or part of the operations of each embodiments of the present disclosure. The aforementioned storage medium includes: a USB flash drive, mobile hard disk, read-only memory (ROM), random access memory (RAM), magnetic disk, optical disk, or other media that may store program codes.

If the technical solutions of the present disclosure involve personal information, a product using the technical solutions of the present disclosure has clearly informed the personal information processing rules and obtained personal voluntary consent before processing the personal information. If the technical solutions of the present disclosure involve sensitive personal information, the product using the technical solutions of the present disclosure has obtained personal independent consent before processing the sensitive personal information, and at the same time meets the "explicit consent" requirement. For example, on personal information collection devices such as cameras, clear and prominent signs are arranged to inform that the individual has been entered the personal information collection scope and personal information will be collected. If the individual voluntarily enters the collection scope, it is deemed that he or she agrees to the collection of his or her personal information. Alternatively, on the devices that processes personal information, the personal information processing rules are notified by obvious signs/information, and the individual's authorization is obtained through pop-up information or by asking the individual to upload his or her personal information. The personal information processing rules may include information such as a personal information processor, a purpose of personal information processing, a processing method, and a type of personal information processed.

The above description is only embodiments of the present disclosure, and does not limit the patent scope of the present disclosure. Any equivalent structure or equivalent process transformation made using the contents of the present disclosure specification and drawings, or directly or indirectly used in other related technical fields, are also included in the patent protection scope of the present disclosure.

**Claims**

1. A speech recognition method, comprising:

   obtaining a to-be-recognized speech and obtaining a speech recognition model after training, wherein the speech recognition model comprises an encoding network and a decoding network;
   during each stage of encoding the to-be-recognized speech using the encoding network, classifying the to-be-recognized speech under a target speech attribute to obtain a predicted attribute category to which the to-be-recognized speech belongs, and performing encoding to obtain a first encoding feature according to the predicted attribute category under the target speech attribute;
   decoding the first encoding feature according to the decoding network to obtain a recognition text of the to-be-recognized speech, wherein the speech recognition model is adjusted according to at least a first loss, and the first loss represents a difference between a preset attribute category annotated in a speech sample and a sample attribute category recognized and obtained by the speech recognition model under the target speech attribute.

2. The speech recognition method according to claim 1, wherein the encoding network comprises a plurality of first network blocks connected in sequence and associated with the target speech attribute, the first network blocks are respectively configured to execute different stages of encoding, each of the first network blocks associated with the target speech attribute comprises a first classification layer for classifying under the target speech attribute and a plurality of first expert layers corresponding one-to-one with preset attribute categories under the target speech attribute, and at least one of the first expert layers is configured to perform encoding according to the predicted attribute category under the target speech attribute.

3. The speech recognition method according to claim 2, wherein before the classifying the to-be-recognized speech under a target speech attribute to obtain a predicted attribute category to which the to-be-recognized speech belongs, the method further comprises:

   selecting one of the first network blocks corresponding to a current stage as a first target network block;
   the classifying the to-be-recognized speech under a target speech attribute to obtain a predicted attribute category to which the to-be-recognized speech belongs, comprises:

   performing classifying by using a first classification layer in the first target network block, to obtain a first probability that the to-be-recognized speech belongs to each of the preset attribute categories under the target speech attribute;
   determining the predicted attribute category to which the to-be-recognized speech belongs according to the first probability that the to-be-recognized speech belongs to each of the preset attribute categories;
   the performing encoding to obtain a first encoding feature according to the predicted attribute category under the target speech attribute, comprises:

   selecting one of first expert layers in the first target network block corresponding to the predicted attribute category as a first target expert layer;
   performing encoding to obtain the first encoding feature by using the first target expert layer.

4. The speech recognition method according to claim 2 or 3, further comprising:

   inputting, in response to the one of the first network blocks corresponding to the current stage being not a last one of the first network blocks in the encoding network, a first encoding feature output by the one of the first network blocks corresponding to the current stage to a next one of the first network blocks, until the one of the first network blocks corresponding to the current stage is the last one of the first network blocks in the encoding network;
selecting a first encoding feature output by the last one of the first network blocks as a first encoding feature finally output by the encoding network.

5. The speech recognition method according to claim 3, wherein each of the first network blocks further comprises a shared expert layer;
after the performing encoding to obtain the first encoding feature by using the first target expert layer, the method further comprises:

   performing encoding to obtain a second encoding feature by using the shared expert layer;
   fusing the first encoding feature and the second encoding feature to obtain a first encoding feature finally output by the first target network block.

6. The speech recognition method according to claim 2, wherein the first network blocks are divided into at least one network group, and each of the first network blocks in the same network group is associated with the same target speech attribute.

7. The speech recognition method according to claim 1, wherein the decoding network comprises a plurality of second network blocks connected in sequence and associated with the target speech attribute, each of the second network blocks associated with the target speech attribute comprises a second classification layer for classifying under the target speech attribute and a plurality of second expert layers corresponding one-to-one with preset attribute categories under the target speech attribute, and at least one of the second expert layers is configured to perform decoding according to a corresponding one of the preset attribute categories under the target speech attribute.

8. The speech recognition method according to claim 7, wherein the recognition text is obtained by combining decoding characters decoded at each decoding moment respectively, and each stage of each decoding moment is executed by a different one of the second network blocks; at each decoding moment, the method further comprises:

   selecting one of the second network blocks corresponding to a current stage of the decoding moment as a second target network block;
   performing classifying on each of the decoding characters decoded at each previous decoding moment respectively by using a second classification layer in the second target network block, to obtain a second probability that each of the decoding characters belongs to each of the preset attribute categories;

determining a second expert layer in the second target network block for decoding the decoding characters as a second target expert layer according to the second probability that each of the decoding characters belongs to each of the preset attribute categories;

performing decoding on the decoding characters by using the second target expert layer to obtain a first decoding feature;

performing decoding according to the first encoding feature and the first decoding feature to obtain a decoding character at the decoding moment.

9. The speech recognition method according to claim 1, wherein the speech recognition model is further adjusted according to a second loss, and the second loss is determined according to: under the target speech attribute, a proportion of each sample character in a text sample annotated by the speech sample belonging to each of preset attribute categories and an average probability that the sample character belongs to each of the preset attribute categories.

10. A speech recognition model training method, comprising:

obtaining speech samples;

during each stage of encoding the speech samples by using an encoding network of a speech recognition model, classifying the speech samples under a target speech attribute to obtain sample attribute categories to which the speech samples belong, and performing encoding to obtain first sample encoding features according to the sample attribute categories under the target speech attribute;

decoding the first sample encoding features by using a decoding network of the speech recognition model to obtain recognition texts of the speech samples;

determining a first loss according to differences between the sample attribute categories to which the speech samples belong and preset attribute categories annotated in the speech samples, and determining a recognition loss according to differences between the recognized texts of the speech samples and preset texts annotated in the speech samples;

adjusting network parameters of the speech recognition model according to at least the first loss and the recognition loss.

11. The speech recognition model training method according to claim 10, further comprising:

obtaining proportions of the preset attribute categories to which sample characters in sample texts annotated in the speech samples belong, and average probabilities that the sample characters belong to each of the preset attribute categories;

determining a second loss according to the proportions and the average probabilities;

wherein the adjusting network parameters of the speech recognition model according to at least the first loss and the recognition loss, comprises:

adjusting the network parameters of the speech recognition model according to the first loss, the second loss, and the recognition loss.

12. The speech recognition model training method according to claim 11, wherein the determining a second loss according to the proportions and the average probabilities, comprises:

obtaining products, each of which is multiple by one the proportions of one of the preset attribute categories to which the sample characters belong and one of the average probabilities that the sample characters belong to the one of preset attribute categories, as probability parameters;

taking a product of a sum of the probability parameters and the number of preset attribute categories as the second loss.

13. An electronic device, comprising a memory and a processor, wherein the memory is configured to store a program instruction, and the processor is configured to execute the program instruction to achieve the speech recognition method according to any one of claims 1-9, or to achieve the speech recognition model training method according to any one of claims 10-12.

14. A computer-readable storage medium, configured to store a program instruction, wherein the program instruction is configured to be executed by a processor to achieve the speech recognition method according to any one of claims 1-9, or to achieve the speech recognition model training method according to any one of claims 10-12.

a to-be-recognized speech is obtained and a speech recognition model after training is obtained — S11

during each stage of encoding the to-be-recognized speech using the encoding network, the to-be-recognized speech is classified under a target speech attribute to obtain a predicted attribute category to which the to-be-recognized speech belongs, and encoding is performed to obtain a first encoding feature according to the predicted attribute category under the target speech attribute — S12

the first encoding feature is decoded according to a decoding network to obtain a recognition text of the to-be-recognized speech — S13

FIG. 1

first encoding feature

second residual calculation and normalization layer

first network block ⟶ first expert layer

first expert layer

⋮

first expert layer

first residual calculation and normalization layer

self-attention layer

initial features of the to-be-recognized speech

FIG. 2

the to-be-recognized speech is obtained and the speech recognition model after training is obtained — S31

↓

the first network block corresponding to the current stage is selected as the first target network block — S32

↓

the first classification layer in the first target network block is used to perform classifying to obtain the first probability that the to-be-recognized speech belongs to each preset attribute category under the target speech attribute — S33

↓

the predicted attribute category to which the to-be-recognized speech belongs is determined according to the first probability that the to-be-recognized speech belongs to each preset attribute category — S34

↓

the first expert layer corresponding to the predicted attribute category in the first target network block is selected as the first target expert layer — S35

↓

the first target expert layer is used to perform encoding to obtain the first encoding feature — S36

↓

a shared expert layer is used to perform encoding to obtain a second encoding feature — S37

↓

the first encoding feature and the second encoding feature are fused to obtain the first encoding feature finally output by the first target network block — S38

↓

decoding is performed on the first encoding feature according to the decoding network to obtain the recognition text of the to-be-recognized speech — S39

FIG. 3

first encoding feature

↑

| second residual calculation and normalization layer |

↑

| first network block | → | first expert layer |
| | | first expert layer | | shared expert layer |
| | | ⋮ |
| | | first expert layer |

↑

| first residual calculation and normalization layer |

↑

| self-attention layer |

↑

initial features of the to-be-recognized speech

FIG. 4

```
                                                                    ┌─ S51
┌──────────────────────────────────────────────────────────────────┐
│                                                                    │
│                  speech samples are obtained                       │
│                                                                    │
└──────────────────────────────────────────────────────────────────┘
                                                                    ┌─ S52
┌──────────────────────────────────────────────────────────────────┐
│ during each stage of encoding the speech samples by using an       │
│ encoding network of a speech recognition model, the speech         │
│ samples are classified under the target speech attribute to obtain  │
│ sample attribute categories to which the speech samples belong, and │
│ encoding is performed to obtain first sample encoding features      │
│ according to the sample attribute categories under the target       │
│ speech attribute                                                    │
└──────────────────────────────────────────────────────────────────┘
                                                                    ┌─ S53
┌──────────────────────────────────────────────────────────────────┐
│ the first sample encoding features are decoded by using the         │
│ decoding network of the speech recognition model to obtain          │
│ recognition texts of the speech samples                             │
└──────────────────────────────────────────────────────────────────┘
                                                                    ┌─ S54
┌──────────────────────────────────────────────────────────────────┐
│ a first loss is determined according to a difference between a      │
│ sample attribute category to which the speech sample belongs and a  │
│ preset attribute category annotated in the speech sample, and a     │
│ recognition loss is determined according to a difference between a  │
│ recognized text of the speech sample and a preset text annotated in │
│ the speech sample                                                   │
└──────────────────────────────────────────────────────────────────┘
                                                                    ┌─ S55
┌──────────────────────────────────────────────────────────────────┐
│ the network parameters of the speech recognition model are adjusted │
│ according to at least the first loss and the recognition loss       │
└──────────────────────────────────────────────────────────────────┘
```

FIG. 5

S61

| speech samples are obtained |
| --- |

S62

| during each stage of encoding the speech samples by using the encoding network of the speech recognition model, the speech samples are classified under the target speech attribute to obtain the sample attribute categories to which the speech samples belong, and encoding is performed according to the sample attribute categories under the target speech attribute to obtain first sample coding features |
| --- |

S63

| the first sample encoding features are decoded by using the decoding network of the speech recognition model to obtain recognition texts of the speech samples |
| --- |

S64

| proportions of each of the preset attribute categories to which sample characters in the sample texts annotated in the speech samples belong, and average probabilities that the sample characters belong to each of the preset attribute categories are obtained |
| --- |

S65

| a first loss is determined according to a difference between a sample attribute category to which the speech sample belongs and a preset attribute category annotated in the speech sample, a recognition loss is determined according to a difference between a recognized text of the speech sample and a preset text annotated in the speech sample, and a second loss is determined according to the proportions and the average probabilities |
| --- |

S66

| the network parameters of the speech recognition model are adjusted according to the first loss, the second loss, and the recognition loss |
| --- |

FIG. 6

70

first obtaining module — 71

first encoding module — 72

first decoding module — 73

FIG. 7

80

second obtaining module — 81

second encoding module — 82

second decoding module — 83

loss determination module — 84

adjustment module — 85

FIG. 8

90

| processor | | memory |

92

91

FIG. 9

100

| program instruction |

101

FIG. 10

## INTERNATIONAL SEARCH REPORT

| | International application No. |
|---|---|
| | **PCT/CN2023/139943** |

**A.    CLASSIFICATION OF SUBJECT MATTER**

G10L 15/06(2013.01)i

According to International Patent Classification (IPC) or to both national classification and IPC

**B.    FIELDS SEARCHED**

Minimum documentation searched (classification system followed by classification symbols)

IPC: G10L

Documentation searched other than minimum documentation to the extent that such documents are included in the fields searched

Electronic data base consulted during the international search (name of data base and, where practicable, search terms used)

CNABS, CNTXT, DWPI, CNKI, 百度学术, BAIDU SCHOLAR: 稀疏, 专家, 混合专家, 语音识别, 多个, 专家层, 路由, 门控, 解码器, sparse, mixture of expert, MoE, speech recognition, multi, expert layer, router, gate, decoder

**C.    DOCUMENTS CONSIDERED TO BE RELEVANT**

| Category* | Citation of document, with indication, where appropriate, of the relevant passages | Relevant to claim No. |
|---|---|---|
| PX | CN 116612749 A (IFLYTEK CO., LTD.) 18 August 2023 (2023-08-18) claims 1-12, and description, page 5, lines 3-22, and page 9, lines 11-14 | 1-14 |
| X | CN 111816169 A (AI SPEECH LTD.) 23 October 2020 (2020-10-23) description, paragraphs 25-102, 121, and 130 | 1-6, 9-14 |
| A | CN 113763933 A (TENCENT TECHNOLOGY (SHENZHEN) CO., LTD.) 07 December 2021 (2021-12-07) entire document | 1-14 |
| A | CN 109978051 A (BEIJING INSTITUTE OF TECHNOLOGY) 05 July 2019 (2019-07-05) entire document | 1-14 |
| A | CN 114495904 A (ALIBABA (CHINA) CO., LTD.) 13 May 2022 (2022-05-13) entire document | 1-14 |
| A | CN 114548401 A (NETEASE MEDIA TECHNOLOGY (BEIJING) CO., LTD.) 27 May 2022 (2022-05-27) entire document | 1-14 |

☑ Further documents are listed in the continuation of Box C.        ☑ See patent family annex.

| | |
|---|---|
| *    Special categories of cited documents: <br> "A"  document defining the general state of the art which is not considered to be of particular relevance <br> "D"  document cited by the applicant in the international application <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
|---|---|
| **08 April 2024** | **08 April 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/139943** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 115064173 A (BEIJING DAJIA INTERNET INFORMATION TECHNOLOGY CO., LTD.) 16 September 2022 (2022-09-16)<br>        entire document | 1-14 |
| A | CN 115660034 A (BEIJING BAIDU NETCOM SCIENCE AND TECHNOLOGY CO., LTD.) 31 January 2023 (2023-01-31)<br>        entire document | 1-14 |
| A | CN 115762484 A (JI HUA LABORATORY) 07 March 2023 (2023-03-07)<br>        entire document | 1-14 |
| X | LIU, Yizhou et al. "Bi-encoder Transformer Network for Mandarin-English Code-switching Speech Recognition using Mixture of Experts"<br>*INTERSPEECH 2020*, 29 October 2020 (2020-10-29),<br>        entire document | 1-6, 9-14 |
| A | Abhinav Jain et al. "A Multi-Accent Acoustic Model using Mixture of Experts for Speech Recognition"<br>*INTERSPEECH 2019*, 19 September 2019 (2019-09-19),<br>        entire document | 1-14 |

Form PCT/ISA/210 (second sheet) (July 2022)

## INTERNATIONAL SEARCH REPORT
### Information on patent family members

International application No.

**PCT/CN2023/139943**

| Patent document cited in search report | | | Publication date (day/month/year) | Patent family member(s) | Publication date (day/month/year) |
|---|---|---|---|---|---|
| CN | 116612749 | A | 18 August 2023 | None | |
| CN | 111816169 | A | 23 October 2020 | None | |
| CN | 113763933 | A | 07 December 2021 | None | |
| CN | 109978051 | A | 05 July 2019 | None | |
| CN | 114495904 | A | 13 May 2022 | None | |
| CN | 114548401 | A | 27 May 2022 | None | |
| CN | 115064173 | A | 16 September 2022 | None | |
| CN | 115660034 | A | 31 January 2023 | None | |
| CN | 115762484 | A | 07 March 2023 | None | |

Form PCT/ISA/210 (patent family annex) (July 2022)

**REFERENCES CITED IN THE DESCRIPTION**

**Patent documents cited in the description**

• CN 202310460643